# EUROPEAN PATENT APPLICATION

(11) **EP 4 624 428 A1**
(43) Date of publication of application: **01.10.2025**
(21) Application number: 24165986.1
(22) Date of filing: 25.03.2024
(51) Int. Cl.: C02F 3/04, C02F 3/10

(54) **APPARATUS AND METHOD FOR TREATING WASTEWATER**

(71) Applicant: Owatec Group Oy, 91910 Tupos (FI)
(72) Inventor: PELLINEN, Jaakko, 90520 Oulu (FI); VEIJOLA-KARA, Miska, 90130 Oulu (FI)
(74) Representative: Berggren Oy

(57) **Abstract**

The wastewater treatment apparatus (50) comprises a trickling filter including a tank (2), a filter material bed (4) inside said tank, a first pump (10) and a circulation pipe (20) for pumping wastewater above the filter material bed and first nozzles (24) at the discharge end of the circulation pipe for spraying the wastewater on top of the filter material bed. The first pump is a multiphase pump comprising a gas injector (62) for injecting oxygen-rich gas, such as air or pure oxygen, to the wastewater to create pressurized gas-wastewater mixture.

## Description

### Technical Field

The invention relates to a wastewater treatment apparatus comprising trickling filter, and to a method of treating wastewater.

### Background Art

Biological treatment can be used to enhance the wastewater treatment process of almost all types of wastewaters. One biological wastewater treatment process involves treating wastewater in trickling filters. Trickling filter is a biological fixed-bed reactor that operates under aerobic conditions. The trickling filter usually consists of a cylindrical tank and is filled with a high specific surface area material, such as rocks, gravel or special pre-formed plastic parts providing support medium for biofilm growth. A high specific surface of the filter material provides a large area for biofilm formation. The incoming pre-treated wastewater is sprayed over the filter media e.g. with the use of a rotating sprinkler to dissolve air into the wastewater. While the wastewater percolates through the support material in the presence of air, the microbes that grow in the thin biofilm over the surface of the media oxidize the organic load in the wastewater to carbon dioxide and water thereby removing oxygen demanding substances.

During operation of the trickling filter oxygen is depleted within the biomass and the inner parts of the support media may be anoxic or anaerobic, which weakens the purification capacity of the trickling filter. Therefore, known trickling filters typically have air blowers, which blow air into the filter material bed from below. However, these air blowers have a high energy consumption but still quite low dissolved oxygen transfer rate.

Document WO 99/37586 discloses a process for treating wastewater, wherein the mixture of contaminated water and part of the process effluent is saturated with oxygen containing gas and subsequently circulated over a bed of a support colonized with bacteria. The pressurized, oxygen saturated mixture of contaminated water and effluent is fed into a reactor system, wherein it is allowed to percolate through the support colonized with bacteria. The biological mixture is then fed back to a vessel, wherein the mixture is brought back to atmospherical pressure.

Document DE 4402442 C2 discloses a method for treating wastewater in a trickling filter, wherein the wastewater is saturated with oxygen before entering the trickling filter. The wastewater is saturated with oxygen in a pre-cleaning tank upstream of the trickling filter to largely oxide the wastewater before it enters the subsequent trickling filter.

In the aforementioned documents saturation of the wastewater with oxygen requires a pressurized reactor or a separate pre-cleaning tank, which increases the manufacturing costs of the water treatment apparatus and makes the apparatus complicated to operate.

An object of the invention is to provide an apparatus and a method for treating wastewater, with which drawbacks relating to the prior art can be diminished.

The object of the invention is achieved with the apparatus and method which are characterized in what is disclosed in the independent patent claims. Some preferred embodiments of the invention are disclosed in the dependent claims.

### Summary of the invention

The wastewater treatment apparatus according to the invention comprises a trickling filter, said trickling filter including a tank, a filter material bed inside said tank, a first pump and a circulation pipe for pumping wastewater above the filter material bed and first nozzles at the discharge end of the circulation pipe for spraying the wastewater on top of the filter material bed. The first pump is a multiphase pump comprising a gas injector for injecting gas, such as air or oxygen, to the wastewater to create pressurized gas-wastewater mixture.

In some embodiments of the wastewater treatment apparatus according to the invention the circulation pipe has at least one first pressure valve configured to maintain the pressure of the gas-wastewater mixture inside the circulation pipe and to release pressurised gas-wastewater mixture to flow through the first nozzles. Preferably, the at least one first pressure valve is near the first nozzles.

Some embodiments of the wastewater treatment apparatus according to the invention further comprise an inflow pipe and second pump configured to pump wastewater into the tank via the inflow pipe.

In some embodiments of the wastewater treatment apparatus according to the invention said second pump is a multiphase pump comprising a gas injector for injecting gas, such as air or oxygen, to the wastewater to create pressurized gas-wastewater mixture.

In some embodiments of the wastewater treatment apparatus according to the invention the inflow pipe has a discharge end inside the tank below the filter material bed and second nozzles in the portion of the of the inflow pipe locating inside the tank.

In some embodiments of the wastewater treatment apparatus according to the invention the inflow pipe has at least one second pressure valve configured to maintain the pressure of the gas-wastewater mixture inside the inflow pipe and to release pressurised gas-wastewater to flow through the second nozzles into the tank. Preferably, the at least one second pressure valve is near the second nozzle.

In some embodiments of the wastewater treatment apparatus according to the invention the first pump and/or the second pump are/is configured to generate 5,0 bar- 7,0 bar pressure to the gas-wastewater mixture.

In some embodiments of the wastewater treatment apparatus according to the invention the at least one first pressure valve and/or the at least one second pressure valve are/is configured to maintain 5,0 bar- 7,0 bar pressure inside the inflow pipe and/or the circulation pipe.

In some embodiments of the wastewater treatment apparatus according to the invention the first pump and the second pump are substantially similar.

In some embodiments of the wastewater treatment apparatus according to the invention the apparatus further comprises an outflow pipe for removing treated wastewater from the tank.

The method of treating wastewater according to the invention in a wastewater treatment apparatus comprising trickling filter, which trickling filter includes a tank and a filter material bed inside said tank, comprises steps of pumping wastewater from the tank above filter material bed and spraying the wastewater on top of the filter material bed through first nozzles. The method further comprises steps of injecting gas, such as air or oxygen, to the wastewater before spraying the wastewater on top of the filter material bed to create pressurized gas-wastewater mixture and releasing the pressurized gas-wastewater mixture to flow through the first nozzles causing a pressure drop in the gas-wastewater mixture generating gas containing microbubbles into the wastewater sprayed through the first nozzles.

In some embodiments of the method according to the invention the wastewater is pumped above the filter material bed by a first pump, which is a multiphase pump, and gas, such as air or oxygen, is injected to the wastewater by said first pump.

Some embodiments of the method according to the invention further comprise steps of pumping wastewater into the tank via an inflow pipe, injecting gas, such as air or oxygen, to the wastewater before discharging the wastewater from the inflow pipe into the tank to create pressurized gas-wastewater mixture and releasing the pressurized gas-wastewater mixture from the inflow pipe into the tank causing a pressure drop in the gas-wastewater mixture generating gas containing microbubbles into the released wastewater.

In some embodiments of the method according to the invention the wastewater is pumped by a second pump, which is a multiphase pump, and gas, such as air or oxygen, is injected to the wastewater by said second pump.

In some embodiments of the method according to the invention the first pump and/or the second pump are configured to generate pressurized gas-wastewater mixture, which, when released to or near the atmospheric pressure, creates into the wastewater microbubbles having a diameter less than 10 µm.

An advantage of the invention is, that it enhances the purification efficiency of the wastewater treatment apparatus by increasing the oxygen supply for the microbes.

A further advantage of the invention is, that the treatment time of the wastewater in the treatment apparatus can be reduced thanks to the enhanced purification efficiency, which increases the treatment capacity of the treatment apparatus.

Another advantage of the invention is, that the size of the treatment apparatus can be reduced without diminishing the treatment capacity.

Another advantage of the invention is, that is diminishes the energy consumption of the treatment apparatus, because large, energy-wasting air blowers are no longer needed.

Another advantage of the invention is, that it reduces the amount of chemicals needed in the subsequent chemical treatment process.

### Brief Description of the Drawings

In the following the invention will be described in detail, by way of examples, with reference to the accompanying drawings in which,
- Fig. 1: depicts an example on an apparatus according to the invention as a schematic side elevation,
- Fig. 2: depicts the pump belonging to the apparatus shown in fig. 1 as a partial cross-section and
- Fig. 3: depicts the method according to the invention as a flow chart.

### Detailed Description

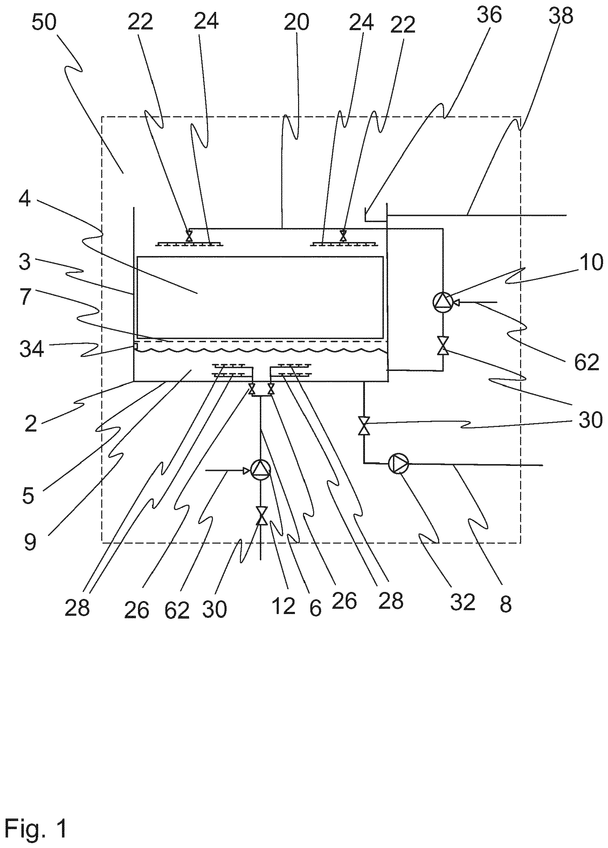

In figures 1 an example of an apparatus according to the invention is shown as a schematic side elevation view.

The wastewater treatment apparatus 50 comprises a trickling filter including a tank 2 for receiving and treating wastewater. Tank has a side wall 3 and a bottom 5, which define a watertight space for the wastewater to be treated. Inside the tank there is a filter material bed 4 comprising support material for a biofilm growth. The filter bed material may comprise crushed rocks, gravel, shredded plastic bottles or special plastic objects, for example. The filter material bed rests on a water permeable filter support 7 apart from the bottom 5 of the tank. The lower part of the tank below the filter material bed acts as collection sink 9 for the wastewater, which has percolated through the filter material bed. The volume of the tank and the collection sink can be dimensioned according to the desired treatment capacity of the apparatus. Near the upper edge of the side wall there is an overflow chute 36 and overflow pipe 38 to remove wastewater form the tank in possible overfill situations.

The trickling filter comprises a circulation pipe 20 and a first pump 10 configured to pump wastewater from the collection sink to above the filter material bed 4. The first end of the circulation pipe extends through the side wall 3 of the tank into the collection sink 9 and the second end of the circulation pipe extends above the filter material bed. Between the first and second ends of the circulation pipe there is a first pump 10, which is configured to pump wastewater from the collection sink via the collection pipe above the filter material bed, when the trickling filter is in operation. At the second end of the circulation pipe there are first nozzles 24, through which the wastewater is sprayed on top of the filter material bed in form of a fine spray. During spraying oxygen dissolves into the sprayed wastewater from the ambient air increasing the oxygen content of the wastewater. The sprayed wastewater slowly percolates, i.e. trickles through the filter material bed back to the collection sink. Therefore, the wastewater is pumped continuously to circulate the wastewater through the filter material bed.

The first pump 10 is a multiphase pump comprising a gas injector 62 configured to inject oxygen rich gas, such as air or pure oxygen, into the wastewater to create pressurised gas-wastewater mixture flowing inside the circulation pipe. The gas injector comprises a suction pipe, through which air is sucked into the pump when the pump is in operation. When air is used as oxygen rich gas, the suction pipe can open into the ambient air. When other gases are used, the suction pipe is connected to a suitable gas-source (not shown), such as air a gas container. The first nozzles 24 are connected to the second end of circulation pipe 20 via first pressure valves 22, which are configured to maintain the pressure of the gas-wastewater mixture inside the circulation pipe within predetermined level and simultaneously release pressurised gas-wastewater to flow through the first nozzles 24. Releasing the pressurised gas-wastewater mixture into an atmospheric pressure causes a sudden pressure drop in the gas-wastewater mixture, which generates gas containing microbubbles into the wastewater. It has been discovered, that when pressurised gas-wastewater suddenly enters to the atmospheric pressure, the diameter of the created microbubbles can be less than 10 µm. The oxygen carried by the circulated wastewater acts as a primary oxygen source for the microbes growing in a biofilm on the surface of the filter bed material. Since oxygen is transferred into the wastewater both through dissolving during spraying and by direct injection into the circulated wastewater, the oxygen content of the wastewater trickling through the filter material bed is a very high.

Below the tank there is an inflow pipe 6, having two branches, which extend through the bottom 5 into the tank 2. The intake end of the inflow pipe is connected to a wastewater source (not shown), which can be wastewater pretreatment unit or a sewage network, for example. A second pump 12 is installed between the intake end and the discharge end of the inflow pipe for pumping wastewater from the wastewater source into the tank below the filter material bed, i.e. into the collection sink 9. The two branches at the discharge end of the inflow pipe are furnished with second nozzles 28, through which the wastewater is sprayed into the tank. The second pump may run periodically or preferably continuously.

In a preferred embodiment of the wastewater treating apparatus also the second pump 12 is a multiphase pump comprising a gas injector 62 configured to inject oxygen rich gas, such as air or pure oxygen, from gas-source (not shown) into the wastewater to create pressurised gas-wastewater mixture flowing inside the inflow pipe. Thus, oxygen is injected into the wastewater before the wastewater enters into the tricking filter. The second nozzles 28 are connected to the discharge end of inflow pipe 6 via second pressure valves 26, which are configured to maintain the pressure of the gas-wastewater mixture inside the inflow pipe within predetermined level and simultaneously release pressurised gas-wastewater to flow through the second nozzles 28. The second nozzles are inside the collection sink below the surface level of the wastewater. However, the hydrostatic pressure at the depth of the second nozzles is close to the atmospheric pressure, whereby releasing the pressurised gas-wastewater mixture into collection sink causes a sudden pressure drop in the gas-wastewater mixture, which generates gas containing microbubbles into the wastewater. Since the diameter of the created gas containing microbubbles is very small, they typically stay in the wastewater for a long time. Therefore, at least part of part bubbles generated by the second pump are still present in the wastewater, when the circulated wastewater enters to the filter material bed 4.

The amount and spraying capacity of the first and second nozzles is dimensioned to match to the pumping capacity of the first and second pumps. If the multiphase pump has only one operation speed, i.e. the pumping rate is constant, the flow rate through the nozzles is known from the dimensioning of the pump. The pressure of the gas-wastewater mixture inside the inflow and circulation pipes is adjusted with the first and second valves, i.e. by controlling the amount of wastewater released through the first and second valves to keep the pressure of the gas-wastewater mixture within desired range. Preferably, the first pressure valves and the second pressure valves are configured to maintain the pressure inside the inflow pipe and/or the circulation pipe within 5,0 bar- 7,0 bar. The first and second pressure valves are placed as close to the first and second nozzles as possible to maximise the retention time of the generated microbubbles in the wastewater.

The trickling filter further comprises an outflow pipe 8 for removing treated wastewater from the tank 2. The first end of the outflow pipe extends into the collection sink 9 and the second end of the outflow pipe extends to a subsequent wastewater treatment unit, such as chemical treatment unit or settling basin (not shown in the figure). The first end of the outflow pipe may extend into the collection sink 9 through the bottom 5 of the tank or through the side wall of the tank. The outflow pipe may be provided with a third pump 32, for pumping the treated wastewater out of the tank or the wastewater may flow out of the tank with the aid of gravitation. The inflow pipe, the circulation pipe and the outflow pipe are provided with shut-off valves 30 locating on the suction sides of the first, second and third pumps.

The operation of the second and third pumps is coordinated to keep the amount of wastewater inside the tank within predetermined range and to achieve desired retention time for the wastewater inside the trickling filter. Preferably, there is a surface level sensor 34 inside the collection sink 9 for measuring the level of the wastewater and the second and/or the third pump(s) are configured to react to the changes of the surface level by adjusting the pumping rate to keep the surface level within predetermined range.

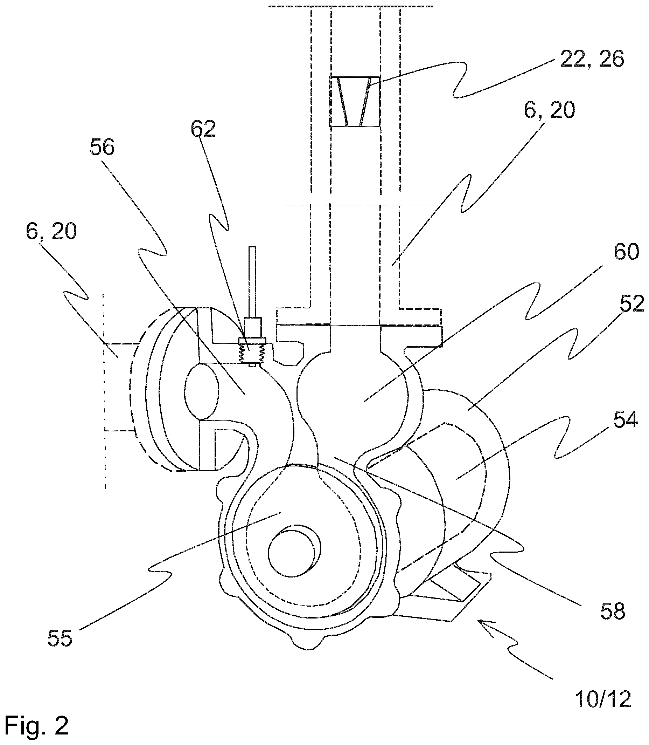

In figure 2 the multiphase pump belonging to the apparatus shown in fig. 1 is depicted as a partial cross-section. The first and second pumps, i.e. the multiphase pumps, are structurally similar, whereby figure 2 and the following explanation applies both to the first pump and to the second pump. However, the pumping capacity of the first and second pumps may be unequal. In the following explanation term "pump" refers both to the first and to the second pump.

The pump comprises a casing 52, an impeller 55 and a motor 54 for rotating the impeller. The casing encloses a chamber comprising an inflow channel 56 and an outflow channel 58. The impeller is locating inside said chamber between the inflow and outflow channels. The impeller is a disk-like part having grooves or indentation (not shown) on the outer circumference of the impeller for moving water from the inflow channel to the outflow channel. The inflow and outflow channels are provided with flanges for connection to the inflow and circulation pipes 6, 20 respectively.

In the inflow channel 56 of the pump there is a gas injector 62, for injecting gas into the wastewater flowing through the inflow channel to create a gas-wastewater mixture. The injected gas is preferably air or pure oxygen, but it can contain also ozone or carbon dioxide.

The outflow channel contains an enlargement between the impeller and the flange constituting a pressure chamber 60. The pressure chamber is connected to the inflow and circulation pipes 6, 20 respectively which lead into the first and second pressure valves 22, 26 and first and second nozzles 24, 28 respectively. The purpose of the pressure valves is to create and maintain the elevated pressure of the gas-wastewater mixture inside the inflow and circulation pipes, when the pumps are in operation. The pressurised gas-wastewater -mixture is released out of the pipes through pressure valves to create micro bubbles into the released wastewater. Preferably, the pressure inside the inflow and circulation pipes is 5 to 7 bar, when the pumps are in operation.

The sufficient water pumping rate and air injection capacity of the pump depends on the amount of the wastewater to be treated and the nature of the wastewater. For example, a pump having a water pumping capacity of 5 m³/h and air injection capacity of 5-6 litre/min can be used in small scale apparatuses and a pump having a water pumping capacity of 15 m³/h and air injection capacity of 15-20 litre/min can be used in large scale apparatuses.

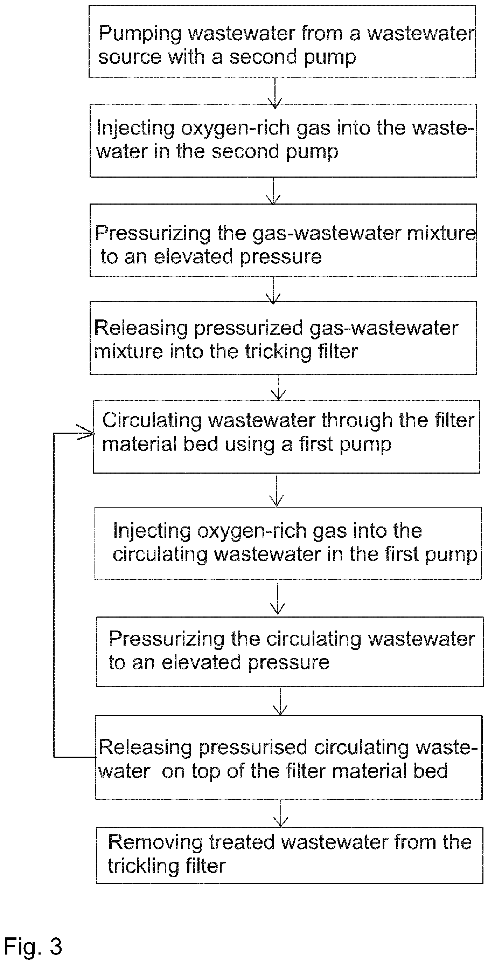

In figure 3 an embodiment of the method according to the invention for treating wastewater is depicted as a flow chart.

In the method wastewater is pumped from a wastewater source with a second pump 12 via inflow pipe 6. Inside the second pump oxygen rich gas is injected into to wastewater to create gas-wastewater mixture and the pressure of the gas-wastewater mixture is raised to an elevated pressure. The pressurised gas-wastewater mixture is released into the tank of the trickling filter, whereby oxygen rich gas containing microbubbles are generated into the wastewater.

The wastewater inside the tank is circulated through the filter material bed by pumping the wastewater from the lower part of the tanks, i.e. from the collection sink above the filter material bed by using the first pump. Inside the first pump oxygen rich gas is injected into to wastewater to increase the oxygen content in the gas-wastewater mixture and the pressure of the gas-wastewater mixture is raised to an elevated pressure. The pressurised gas-wastewater mixture is released from the circulation pipe and sprayed through first nozzles on top of the filter material pipe. The sprayed wastewater percolates through the filter material bed simultaneously carrying oxygen containing microbubbles to the biofilm growing on the surface of the filter bed material.

Treated wastewater is removed from the tank continuously or periodically via outflow pipe. The outflow rate is dimensioned so that a sufficient retention time for the wastewater in the trickling filter is achieved.

The method according to the invention is especially suitable for treating industrial and domestic wastewaters containing organic impurities. Depending on the type of wastewater and the original concentration of impurities, the content and proportion of the nutrients in the wastewater may vary. Microbes growing in the biofilm need nutrients, such as nitrogen and phosphorous, to grow and multiply. If the nitrogen and phosphorous concentrations in the wastewater are too low, nutrients can be added into the trickling filter unit to improve the microbial conditions of the biofilm.

Some preferred embodiments of the apparatus and method and has been disclosed above. The invention is not limited to the solutions explained above, but the invention can be applied in different ways within the limits set by the patent claims.

### Reference Signs:

| | | | |
|---|---|---|---|
| 2 | tank | 30 | shut-off valve |
| 3 | side wall | 32 | third pump |
| 4 | filter material bed | 34 | surface level sensor |
| 5 | bottom | 36 | overflow chute |
| 6 | inflow pipe | 38 | overflow pipe |
| 7 | filter support | 50 | wastewater treatment apparatus |
| 8 | outflow pipe | 52 | casing |
| 9 | collection sink | 55 | impeller |
| 10 | first pump | 54 | motor |
| 12 | second pump | 56 | inflow channel |
| 20 | circulation pipe | 58 | outflow channel |
| 22 | first pressure valve | 62 | gas injector |
| 24 | first nozzle | | |
| 26 | second pressure valve | | |
| 28 | second nozzle | | |

## Claims

1. A wastewater treatment apparatus (50) comprising trickling filter, said trickling filter including a tank (2), a filter material bed (4) inside said tank (2), a first pump (10) and a circulation pipe (20) for pumping the wastewater above the filter material bed (4) and first nozzles (24) at the discharge end of the circulation pipe (20) for spraying the wastewater on top of the filter material bed (4), **characterised in that** said first pump (10) is a multiphase pump comprising a gas injector (62) for injecting gas, such as air or oxygen, to the wastewater to create pressurized gas-wastewater mixture.

2. The wastewater treatment apparatus (50) according to claim 1, **characterised in that** the circulation pipe (20) has at least one first pressure valve (22) configured to maintain the pressure of the gas-wastewater mixture inside the circulation pipe (20) and to release pressurised gas-wastewater mixture to flow through the first nozzles (24).

3. The wastewater treatment apparatus (50) according to claim 2, **characterised in that** the at least one first pressure valve (22) is near the first nozzles (24).

4. The wastewater treatment apparatus (50) according to any of the claims 1 to 3, **characterised in that** the apparatus further comprises an inflow pipe (6) and second pump (12) configured to pump wastewater into the tank (2) via the inflow pipe (6).

5. The wastewater treatment apparatus (50) according to claim 4, **characterised in that** said second pump (12) is a multiphase pump comprising a gas injector (62) for injecting gas, such as air or oxygen, to the wastewater to create pressurized gas-wastewater mixture.

6. The wastewater treatment apparatus (50) according to claim 4 or 5, **characterised in that** the inflow pipe (6) has a discharge end inside the tank (2) below the filter material bed (4) and second nozzles (28) in the portion on the the inflow pipe (6) locating inside the tank (2).

7. The wastewater treatment apparatus (50) according to claim 6, **characterised in that** the inflow pipe (6) has at least one second pressure valve (26) configured to maintain the pressure of the gas-wastewater mixture inside the inflow pipe (6) and to release pressurised gas-wastewater to flow through the second nozzles (28) into the tank (2).

8. The wastewater treatment apparatus (50) according to claim 7, **characterised in that** the at least one second pressure valve (26) is near the second nozzle (28).

9. The wastewater treatment apparatus (50) according to any of the claims 4 to 8, **characterised in that** the first pump (10) and/or the second pump (12) are/is configured to generate 5,0 bar- 7,0 bar pressure to the gas-wastewater mixture.

10. The wastewater treatment apparatus (50) according to any of the claims 7 to 9, **characterised in that** the at least one first pressure valve (22) and/or the at least one second pressure valve (26) are/is configured to maintain 5,0 bar- 7,0 bar pressure inside the inflow pipe (6) and/or the circulation pipe (20).

11. The wastewater treatment apparatus (50) according to any of the claims 4 to 10, **characterised in that** the first pump (10) and the second pump (12) are substantially similar.

12. The wastewater treatment apparatus (50) according to any of the claims 1 to 11, **characterised in that** the apparatus further comprises an outflow pipe (8) for removing treated wastewater from the tank (2).

13. A method of treating wastewater in a wastewater treatment apparatus (50) comprising a trickling filter, said trickling filter including a tank (2) and a filter material bed (4) inside said tank (2), the method comprising steps of pumping wastewater from the tank (2) above the filter material bed (4) and spraying the wastewater on top of the filter material bed (4) through first nozzles (24), **characterised in that** the method further comprises steps of injecting gas, such as air or oxygen, to the wastewater before spraying the wastewater on top of the filter material bed (4) to create pressurized gas-wastewater mixture and releasing the pressurized gas-wastewater mixture to flow through the first nozzles (24) causing a pressure drop in the gas-wastewater mixture generating gas containing microbubbles into the wastewater sprayed through the first nozzles (24).

14. The method according to claim 13, **characterised in that** the wastewater is pumped above the filter material bed (4) by a first pump (10), which is a multiphase pump, and gas, such as air or oxygen, is injected to the wastewater by said first pump (10).

15. The method according to claim 13 or 14, **characterised in that** the method further comprises steps of pumping wastewater into the tank (2) via an inflow pipe (6), injecting gas, such as air or oxygen, to the wastewater before discharging the wastewater from the inflow pipe (6) into the tank (2) to create pressurized gas-wastewater mixture and releasing the pressurized gas-wastewater mixture from the inflow pipe (6) into the tank (2) to causing a pressure drop in the gas-wastewater mixture generating gas containing microbubbles into the released wastewater.

16. The method according to claim 15, **characterised in that** the wastewater is pumped by a second pump (12), which is a multiphase pump, and gas, such as air or oxygen, is injected to the wastewater by said second pump (12).

17. The method according to claim 15 or 16, **characterised in that** the first pump (10) and/or the second pump (12) are configured to generate pressurized gas-wastewater mixture, which, when released to or near the atmospheric pressure, creates into the wastewater microbubbles having a diameter less than 10 µm.
